# EUROPEAN PATENT SPECIFICATION

(11) **EP 1 765 126 B1**
(45) Date of publication and mention of the grant of the patent: **05.09.2007**
(21) Application number: 05762947.9
(22) Date of filing: 27.06.2005
(51) Int. Cl.: A47J 31/40, B08B 1/00, G07F 13/06

(54) **BREWED-BEVERAGE VENDING MACHINE PROVIDED WITH MEANS FOR CLEANING THE BREWING FILTER**
AUFBRÜHGETRÄNKEAUTOMAT MIT MITTELN ZUR REINIGUNG DES AUFBRÜHFILTERS
DISTRIBUTEUR AUTOMATIQUE DE BOISSONS INFUSEES, EQUIPE DE MOYENS PREVUS POUR NETTOYER LE FILTRE A INFUSION

(30) Priority: 05.07.2004 IT PN20040048
(43) Date of publication of application: 28.03.2007
(73) Proprietor: WITTENBORG A/S, DK-5000 Odense C (DK)
(72) Inventor: VAN HATTEM, Jan Cornelius, NL-3958 BN Amerogen (NL); DE REUS, Robert Francis, NL-6904 PZ Zanevaar (NL)
(74) Representative: Gonella, Mario
(86) International application number: PCT/EP2005/052995
(87) International publication number: WO 2006/003128

(56) References cited:
- EP-A- 1 336 365
- US-A- 5 406 882

## Description

The present invention refers to a vending machine for beverages prepared by brewing, which is provided with means for cleaning the brewing filter.

Vending machines for brewed beverages are provided with a brewing unit, in which there are generally provided a brewing chamber, where water is mixed with the substance to be infused, and a filter collecting the brewing or infusion residues, while allowing the infusion, i.e. the brew to permeate it. A need that is strongly and widely felt in connection with this kind of vending machines is the actual capability of ensuring an adequate degree of cleaning of the various component parts of the brewing unit after each utilization or operation cycle thereof. For instance, when producing certain hot beverages starting from raw materials in powder form, the need arises at the end of each cycle for the brewing or infusion residues to be removed from the brewing unit and, in particular, from the filter in which they collect and build up.

A number of devices that are designed to ensure such cleaning of the brewing filter, i.e. to enable the brewing filter to be cleaned, are known in the art. One such prior-art device for the removal of brewing residues, and adapted to be used in particular on substantially flat filtering surfaces, includes a brush, or a scraper, which is brought into contact with the filtering surface for the latter to be scrubbed therewith.

An application of a device of the above-cited kind is described in the US patent publication No. 4,709,625, which discloses a beverage vending machine that does not make use of any pressurization systems. This machine comprises a moving carriage, on which there is elastically mounted a brewing container, and on which there is also mounted a brush for cleaning the filter. After the beverage has been brewed, the carriage is displaced so as to cause the brewing container to move away from the filter through which the brew is due to percolate, and which remains in a stationary position. Owing to this displacement, the brush is in turn capable of cleaning the surface of the filter by removing the brewing residues therefrom. A solution of this kind, calling for the brewing container to be displaced, has however a major drawback in that, during the initial phase of its displacement, the brewing container rubs and scratches against the filter itself, thereby impairing the integrity thereof in the long run. In fact, the presence of the elastic means, which are used to connect the carriage with the brewing container, practically causes the latter to be kept pressing against the filter in view of preventing brew from leaking and spilling through the filter-container interface. This state of the container tightly fitting against the filter, however, turns out as being disadvantageous when the container is displaced, i.e. moved away from the filter, since it most obviously contributes to keeping a high degree of friction between the surfaces that are due to move relative to each other.

A further application of the above-cited prior-art arrangement is described in the US patent publication No. 5,351,604 that discloses a brewing unit in which the brewing chamber can be moved away from the filter by lifting it off, rather than displacing it through a translational movement, as shown in US 4,709,625. Lifting the brewing chamber, however, is rather complicated and awkward to perform and introduces a number of disadvantageous complications in the design and construction of the vending machine altogether. For instance, the mechanical members used to lift the brewing chamber must be duly strengthened in view of adequately coping with the actual weight of such chamber, while the totality of the various water, liquid and electrical connections must be frequently checked to make sure that they do not undergo any loss of functionality due to the interaction thereof with the moving parts of the arrangement.

Further to cleaning the filter systematically, vending machines used to prepare and dispense brewed beverages further require periodical cleaning of the brewing chamber itself. Now, such cleaning is disadvantageously impeded in the embodiments disclosed and described in the above-cited US patents Nos. 4,709,625 and 5,351,604, owing to the necessary provision of the various parts and members required to displace and lift, respectively, said brewing chamber. In particular, the US patent No. 4,709,625 shows a way in which the brewing residues are to be removed from the container that is provided to receive and hold the raw materials, and which acts as the actual brewing chamber for preparing the beverage. According to the proposed solution, the container is caused to jolt by having it moving along a correspondingly shaped guide that causes said container to first drop abruptly and then stop in an equally abrupt manner. This solution, however, does by no means turn out as being always effective in reaching its purpose, owing to the rather strong of adhesion that is generally to be found between wet brewing residues and the surfaces of the brewing container.

Another vending machine is disclosed and described in EP1556365.

It therefore is a main object of the present invention to provide a brewed-beverage vending machine that overcomes and does away with such typical drawbacks and disadvantages of prior-art vending machines of this kind, as noted above.

Within this general object, it is a purpose of the present invention to provide a brewed-beverage vending machine, which is effective in simplifying the operations required to clean the various component parts thereof and ensure proper maintenance.

Another purpose yet of the present invention is to provide a brewed-beverage vending machine, which is simple to construct with a limited number of component parts.

According to the present invention, these aims are reached in a brewed-beverage vending machine incorporating the characteristics as recited in the appended claim 1.

Features and advantages of the present invention will anyway be more readily understood from the description that is given below by way of nonlimiting example with reference to the accompanying drawings, in which:
- Figure 1 is a perspective view of a vending machine according to the present invention, within which there is comprised a brewing unit;
- Figure 2 is a side view of the brewing unit, along with the actuator means for displacing the filter;
- Figure 3a is a perspective view of the actuator means and the filter in the brewing position;
- Figure 3b is a perspective view of the actuator means and the filter when the latter starts moving, i.e. being displaced;
- Figure 3c is a perspective view of the actuator means and the filter at the moment in which the cleaning means start interacting with the filter;
- Figure 3d is a perspective view of the actuator means and the filter at the moment in which the cleaning means have completed a passage thereof over the filter;
- Figure 4 is a top view of the brewing unit in the phase in which it is being released from the vending machine shown in Figure 1;
- Figure 5 is a perspective view of the brewing unit, in the state in which it is pulled out of the vending machine shown in Figure 1.

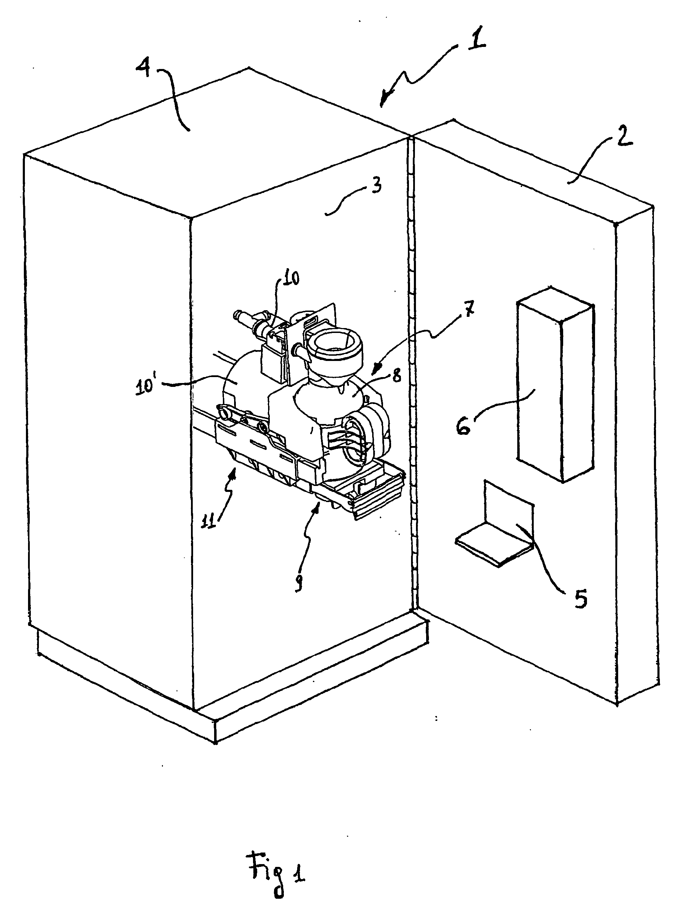

Schematically shown in Figure 1 is a vending machine 1 for preparing and dispensing brewed beverages, which is provided with a door 2 that closes a compartment 3 defined by the walls of an outer casing 4. The door 2 is provided with an aperture 5 that allows for the beverage being dispensed by the vending machine 1 to be collected and removed by the buyer. Provided on the door 2 there are also selector means 6 of a kind as substantially known as such in the art, such as a push-button unit, for selecting the beverage that a buyer wishes to drink. The selector means 6 may be integrally provided also with the means for paying the selected beverage, such as for instance a magnetic card reader or a coin-operated mechanism. Inside the compartment 3 there is arranged a brewing unit 7, which is provided with a brewing chamber 8 being closable on the bottom by means of a filter 9 that is movable with the help of actuator means 11 and adapted to retain the brewing residues. The brewing unit 7 is connected with fluid-carrying means 10, 10', such as for instance water delivery means and means for supplying a compressed gas. It will most readily be appreciated that - although not shown in the Figure - provided inside said compartment 3 there will be also appropriate devices for storing and dispensing cups, as well as one or more containers for storing the raw materials required to prepare the beverages, further of course to the various water and fluid conduits and power-supply means as required by the vending machine 1 to operate.

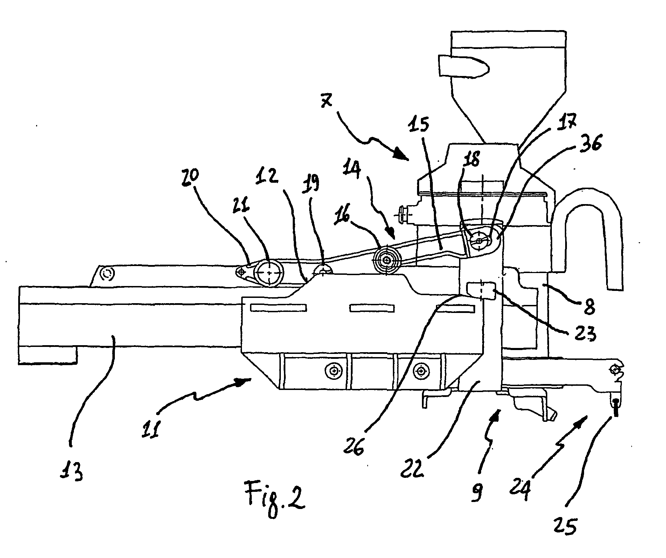

Shown in Figure 2 are the brewing unit 7 and the filter 9, the latter in the state in which it is in a first brewing position thereof, i.e. associated in a fluid-tight manner to the bottom of the brewing chamber 8. The same Figure 2 also illustrates the actuator means 11, which cause the filter 9 to move and displace in the manner that shall be explained in greater detail below.

These actuator means 11 comprise a cam 12 for actuating the filter 9 into moving, and are in a preferred manner slidably associated to a support structure 13 that is attached to the vending machine 1 (not shown in Figure 2). The actuator means 11 also comprise cleaning means 24, such as for instance a brush 25, which are adapted to interact with the filter 9 to ensure the removal of the brewing residues from the same filter when it is caused to disengage the brewing chamber 8 and moved into a second discharge position. When the filter 9 is in this second position, the cleaning means 24 are operated by the actuator means 11. To this purpose, the cleaning means 24 are preferably attached to the actuator means 11.

The filter 9 is associated to the support structure 13 by means of an articulated kinematical mechanism 14. This kinematical mechanism 14 comprises at least a first lever 15 provided with a roller-type tappet 16 moving on the cam 12. This at least a first lever 15 is pivotally connected to the support structure 13 via the pivoting joint 19, and comprises a first end portion 36 provided with a slot-like aperture 17, in which a pin 18 connected to the filter 9 is able to move. Said first lever 15 further comprises a second end portion 20 provided with an opposing member 21 which, as this shall be explained in greater detail further on, interacts with the cam 12 to remove the filter 9 from the brewing position illustrated in Figure 2, by rapidly separating it from the bottom of the brewing chamber 8. To this purpose, the pivoting joint 19 connecting the first lever 15 to the support structure 13 is situated between the first end portion 36 and the second end portion 20 of the lever 15, so that the latter is able to behave as a rocker arm.

As illustrated in Figure 2, the articulated kinematical mechanism 14 comprises at least a second lever 22 associated to the filter 9. Provided on this second lever 22 there is a wedge-shaped jut 23 that interacts with a conjugate surface 26 provided on the actuator means 11 so as to associate the filter 9 with the brewing chamber 8 in a fluid-tight manner. The second lever 22 is pivotally associated to the first lever 15 via the pin 18.

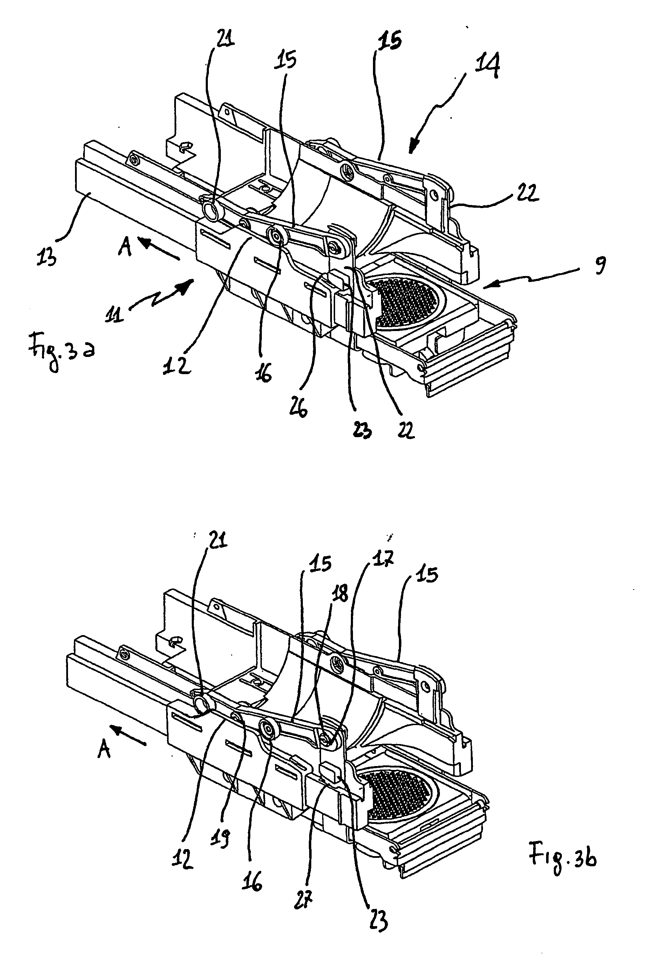

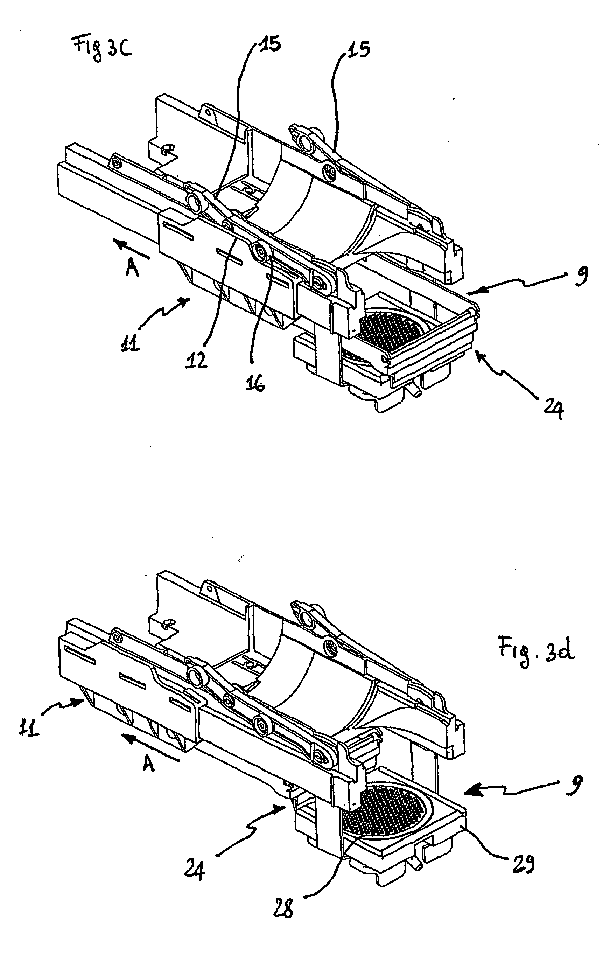

Figures 3a, 3b, 3c and 3d illustrate the way in which the actuator means 11 work in view of causing the filter 9 to displace between a first brewing position, in which it is associated to the brewing chamber 8, and a second discharge position, in which it is separated and moved away from the brewing chamber 8, wherein the brewing chamber 8 is not shown in these Figures for reasons of greater clarity.

In these Figures 3a, 3b, 3c and 3d the articulated kinematical mechanism 14 is shown to feature a symmetrical structure constituted by a pair of first and second levers 15, 22.The movements of this articulated kinematical mechanism 14 shall now be described with reference to the levers that appear in the same Figures, these movements being on the other hand similar to the ones of the levers that do not appear completely in said Figures.

In Figure 3a, the filter 9 is located in the first brewing position thereof and the roller-type tappet 16 of each first lever 15 is engaging the respective cam 12. The wedge-shaped juts 23 of each second lever 22 are engaging the respective conjugate surfaces 26, so as to exert a force urging the filter against the bottom wall of the brewing chamber 8, thereby ensuring a fluid-tight fitting of said filter thereagainst. After a beverage has been brewed and the resulting brewing residues have settled on the filter 9, the actuator means 11 are driven by motor means (not shown) to move in the direction indicated by the arrow A in which the filter 9 is moved away from the brewing chamber 8. In this way, the roller-type tappet 15 rotates about its own axis by following the profile of the cam 12 sliding on the support structure 13. Due to this movement of the actuator means 11, the wedge-shaped jut 23 is caused to disengage the respective conjugate surface 26, thereby allowing the filter 9 to move downwards owing to the force of gravity.

In order to facilitate separation of the filter 9 from the bottom of the brewing chamber 8, which is not shown in the Figure for reasons of greater simplicity, there may be provided an opposing member 21, with which the cam 12 comes into contact to generate on each first lever 15 a torque of such intensity as to cause each such lever to rotate about the pivoting joint 19 by overcoming the force of adhesion between the filter 9 and the bottom of the brewing chamber 8 that may possibly be brought about by the brewing process. The interaction of said opposing member 21 and the cam 12 is represented in Figure 3b.

As the filter 9 is in this way caused to move away from the brewing chamber 8, the wedge-shaped jut 23 does not interfere with the support structure 13 thanks to the provision of a groove 27 in which the same jut 23 is able to move.

In Figure 3c, the filter 9 has completed the movement to travel away from the brewing chamber 8 and lies in its discharge position. At this point, while the actuator means 11 keep moving on in the direction indicated by the arrow A, the cleaning means 24 start to interact with the filter 9 to remove the brewing residues therefrom. Each lever 15 keeps motionless and the roller-type tappet 16 rotates on the moving cam 12. The cleaning means 24 perform a passage over the entire surface of the filter 9, as best illustrated in Figure 3d. Upon completion of such passage on the filter surface by the cleaning means 24, the motor means that drive the actuator means 11 are stopped and set to reverse the direction of movement, in such a manner as to enable the movements illustrated in Figures 3a, 3b, 3c and 3d to be repeated in the reverse order, i.e. the cleaning means 24 to pass again over the filter 9, thereby completing the cleaning of the same filter while it is at the same time returned into the brewing position thereof.

Also illustrated in Figure 3d is the possibility for the filter 9 to be constituted by a perforated surface 28 that is removably associated to a receptacle 29. If desired, the perforated surface 28 and the receptacle 29 may be made integral with each other as a single-piece construction.

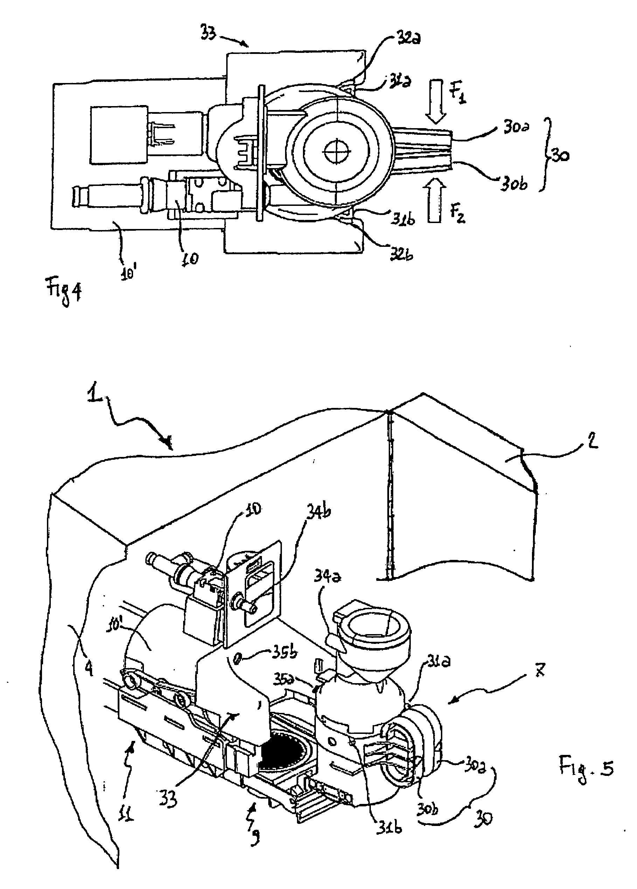

In view of promoting and facilitating cleaning of the entire brewing unit 7, it may be contemplated that such unit be removably associated to the beverage vending machine by means of quick-release/fitting means 31a, 31b, as this is best shown in Figures 4 and 5. To this purpose, the brewing unit 7 is provided with a handle 30, by which it can be conveniently gripped for removal from the vending machine 1; it further comprises one or more quick-release/fitting water or fluid connections 34a and 35a that fit on the respective sockets 34b and 35b provided on the bearing structure 33. These water or fluid connections 34a and 35a enable a fluid communication to be established between the brewing unit 7 and the fluid-carrying means 10, 10'.

Figure 4 illustrates the way in which the brewing unit 7 is released from the vending machine 1. When the pair of handgrips 30a and 30b forming the handle 30 is seized, the same handgrips move from a first position, in which the distance between them is the largest one, and in which the brewing unit 7 is regularly fitted in and connected to the vending machine 1, to a second position in which the distance between the handgrips 30a and 30b is at a minimum and the brewing unit is released from the vending machine. Moving the handgrips 30a and 30b in the directions shown by the arrows F₁ and F₂ in Figure 5 activates the quick-fitting/release means 31a and 31b by causing them to disengage the respective portions 32a and 32b of the bearing structure 33, thereby enabling the brewing unit 7 to be pulled out of the vending machine 1 when seizing the handle 30. Preferably, the quick-fitting/release means 31a and 31b comprise a kind of bayonet joint moving against the action of an elastic member. It will anyway be readily appreciated that a number of other quick-fitting/release means of any type known as such in the art may be used to such purpose in accordance with the present invention. Upon removal from the vending machine, the brewing unit 7 may be held and supported by the handle 30.

Illustrated in Figure 5 is the brewing unit 7 upon removal thereof from the vending machine 1. In this condition, the water connection 34a or 35a used to convey the water into the brewing unit 7 is tightly sealed to prevent fluid from leaking out of the brewing chamber and spilling inside the vending machine 1, thereby soiling it. This water connection is sealed in a fluid-tight manner automatically as soon as the brewing unit 7 is released from the vending machine 1 for removal.

As it can be readily appreciated from the above disclosure, the present invention fully reaches the aims and advantages as set forth hereinbefore by providing a brewed-beverage vending machine in which the filter due to retain the brewing residues and the brewing unit can be most easily and conveniently cleaned. In addition, the possibility for the brewing unit to be removed from, i.e. pulled out of the vending machine, along with the possibility for such unit to be replaced, enables the same to most rapidly undergo maintenance, while avoiding disadvantageous machine down-times. Moreover, the vending machine itself features a simple, cost-effective construction.

It will be readily appreciated that the materials used for the various component parts of the inventive arrangement, as well as the shapes and the sizing thereof, may of course be each time so selected as to more appropriately fit the particular applications and requirements. In addition, the various parts forming the object of the present invention shall not necessarily be understood as being limited to the particular embodiments described and illustrated above, but can rather be the subject of a number of other, different embodiments or modifications thereof without departing from the scope of the present invention.

## Claims

1. Brewed-beverage vending machine (1) comprising:
- a brewing unit (7) provided with a brewing chamber (8) that is closable at the bottom portion thereof by means of a movable filter (9), said filter (9) being adapted to retain the brewing residues;
- actuator means (11) adapted to cause said filter (9) to displace from a first brewing position, in which said filter (9) is associated to said brewing chamber (8) in a fluid-tight manner, to a second discharge position, in which said filter (9) is separated from said brewing chamber (8), and vice-versa,
said actuator means (11) comprising a cam (12) for actuating the filter (9) into displacing, the actuator means (11) further comprising cleaning means (24) interacting with said filter (9) to remove the brewing residues therefrom, said actuator means (24) actuating said cleaning means (24) when the filter (9) is in said second discharge position thereof,
said filter (9) being associated to a support structure (13) by means of an articulated kinematical mechanism (14) comprising at least a first lever (15) provided with a roller type tappet (16) moving on said cam (12)
**characterized in that** said first lever (15) is pivotally connected to said support structure (13) by means of a pivoting connection (19) situated between a first end portion (36) and a second end portion (20) of the first lever (15)

2. Brewed-beverage vending machine (1) according to claim 1 , **characterized in that** said actuator means (11) are slidably associated to said support structure (13).

3. Brewed-beverage vending machine (1) according to any of the preceding claims or combination thereof, **characterized in that** said cleaning means (24) are attached to said actuator means (11).

4. Brewed-beverage vending machine (1) according to any of the preceding claims or combination thereof, **characterized in that** said cleaning means (24) are comprised of a brush (25).

5. Brewed-beverage vending machine (1) according to any of the preceding claims or combination thereof, **characterized in that** said first end portion (36) is provided with a slot-like aperture (17) in which a pin (18) connected to said filter (9) is able to move.

6. Brewed-beverage vending machine (1) according to any of the preceding claims or combination thereof, **characterized in that** said second end portion (20) is provided with an opposing member (21) that interacts with said cam (12) to move said filter (9) away from said first brewing position thereof.

7. Brewed-beverage vending machine (1) according to any of the preceding claims or combination thereof, **characterized in that** said articulated kinematical mechanism (14) comprises at least a second lever (22) associated to said filter (9).

8. Brewed-beverage vending machine (1) according to claim 7, **characterized in that** said second lever (22) comprises a wedge-shaped jut (23) that interacts with a conjugate surface (26) provided on said actuator means (11) to associate said filter (9) to said brewing chamber (8) in a fluid-tight manner.

9. Brewed-beverage vending machine (1) according to any of the preceding claims or combination thereof, **characterized in that** said filter (9) is constituted by a perforated surface (28) that is removably received in a receptacle (29).

10. Brewed-beverage vending machine (1) according to claim 9, **characterized in that** said perforated surface (28) and said receptacle (29) are made integral with each other in a single-piece construction.

11. Brewed-beverage vending machine (1) according to any of the preceding claims or combination thereof, **characterized in that** said brewing unit (7) is removably associated to said vending machine (1) by means of quick-fitting/release connecting means (31a, 31b).

12. Brewed-beverage vending machine (1) according to claim 11, **characterized in that** said brewing unit (7) comprises one or more quick-release/fitting water or fluid connections (34a, 35a).

13. Brewed-beverage vending machine (1) according to claim 11 or 12, **characterized in that** said brewing unit (7) comprises a handle (30).

14. Brewed-beverage vending machine (1) according to claim 13, **characterized in that** said handle (30) actuates said quick-fitting/release connecting means (31a, 31b) into releasing.

15. Brewed-beverage vending machine (1) according to claim 13, **characterized in that** said handle (30) is constituted by a pair of handgrips (30a, 30b) provided in a side-by-side arrangement and adapted to move between a first position, in which they are wide apart from each other and said brewing unit (7) is fitted on to said vending machine (1), and a second position in which they are brought close to each other and said brewing unit (7) is released from said vending machine (1).

## Patentansprüche

1. Aufbrühgetränkeautomat (1), der aufweist:
- eine Brüheinheit (7), die mit einer Brühkammer (8) versehen ist, die an dem Bodenteil davon mittels eines bewegbaren Filters (9) verschließbar ist, wobei der Filter (9) so angepasst ist, um die Aufbrühreste aufzunehmen;
- eine Betätigungseinrichtung (11), die so angepasst ist, um zu bewirken, dass sich der Filter (9) von einer ersten Aufbrühposition, in der der Filter (9) der Aufbrühkammer (8) in einer flüssigkeitsdichten Art und Weise zugeordnet ist, zu einer zweiten Ausgabeposition, in der der Filter (9) von der Aufbrühkammer (8) getrennt ist, und vice versa, verschiebt,
wobei die Betätigungseinrichtung (11) einen Nocken (12) zum Betätigen des Filters (9) beim Verschieben aufweist, wobei die Betätigungseinrichtung (11) weiterhin eine Reinigungseinrichtung (24) aufweist, die mit dem Filter (9) zusammenwirkt, um die Aufbrühreste davon zu entfernen, wobei die Betätigungseinrichtung (11) die Reinigungseinrichtung (24) betätigt, wenn sich der Filter (9) in der zweiten Ausgabeposition davon befindet, wobei der Filter (9) einer Tragestruktur (13) durch einen mehrgliedrigen, kinematischen Mechanismus (14) zugeordnet ist, der mindestens einen ersten Hebel (15), der mit einem Stößel (16) vom Rollen-Typ versehen ist, der sich auf dem Nocken (12) bewegt, aufweist, **dadurch gekennzeichnet, dass** der erste Hebel (15) schwenkbar mit der Tragestruktur (13) mittels einer Schwenkverbindung (19) verbunden ist, die zwischen einem ersten Endabschnitt (36) und einem zweiten Endabschnitt (20) des ersten Hebels (15) liegt.

2. Aufbrühgetränkeautomat (1) nach Anspruch 1, **dadurch gekennzeichnet, dass** die Betätigungseinrichtung (11) gleitend der Tragestruktur (13) zugeordnet ist.

3. Aufbrühgetränkeautomat (1) nach einem der vorhergehenden Ansprüche oder einer Kombination davon, **dadurch gekennzeichnet, dass** die Reinigungseinrichtung (24) an der Betätigungseinrichtung (11) befestigt ist.

4. Aufbrühgetränkeautomat (1) nach einem der vorhergehenden Ansprüche oder einer Kombination davon, **dadurch gekennzeichnet, dass** die Reinigungseinrichtung (24) eine Bürste (25) umfasst.

5. Aufbrühgetränkeautomat (1) nach einem der vorhergehenden Ansprüche oder einer Kombination davon, **dadurch gekennzeichnet, dass** der erste Endabschnitt (36) mit einer schlitzähnlichen Öffnung (17) versehen ist, in der sich ein Stift (18), der mit dem Filter (9) verbunden ist, bewegen kann.

6. Aufbrühgetränkeautomat (1) nach einem der vorhergehenden Ansprüche oder einer Kombination davon, **dadurch gekennzeichnet, dass** der zweite Endabschnitt (20) mit einem gegenüberliegenden Element (21) versehen ist, das mit dem Nocken (12) zusammenwirkt, um den Filter (9) von der ersten Aufbrühposition davon weg zu bewegen.

7. Aufbrühgetränkeautomat (1) nach einem der vorhergehenden Ansprüche oder einer Kombination davon, **dadurch gekennzeichnet, dass** der mehrgliedrige, kinematische Mechanismus (14) mindestens einen zweiten Hebel (22) aufweist, der dem Filter (9) zugeordnet ist.

8. Aufbrühgetränkeautomat (1) nach Anspruch 7, **dadurch gekennzeichnet, dass** der zweite Hebel (22) einen keilförmigen Vorsprung (23) aufweist, der mit einer konjugierten Oberfläche (26) zusammenwirkt, die an der Betätigungseinrichtung (11) vorgesehen ist, um den Filter (9) mit der Aufbrühkammer (8) in einer flüssigkeitsdichten Art und Weise zuzuordnen.

9. Aufbrühgetränkeautomat (1) nach einem der vorhergehenden Ansprüche oder einer Kombination davon, **dadurch gekennzeichnet, dass** der Filter (9) durch eine perforierte Fläche (28) gebildet ist, die entnehmbar in einer Aufnahme (29) aufgenommen ist.

10. Aufbrühgetränkeautomat (1) nach Anspruch 9, **dadurch gekennzeichnet, dass** die perforierte Fläche (28) und die Aufnahme (29) integral mitelnander in einem einteiligen Aufbau gebildet sind.

11. Aufbrühgetränkeautomat (1) nach einem der vorhergehenden Ansprüche oder einer Kombination davon, **dadurch gekennzeichnet, dass** die Aufbrüheinheit (7) entnehmbar dem Verkaufsautomat (1) durch eine Schnellbefestigungs/Löse-Verbindungseinrichtung (31a, 31b) zugeordnet ist.

12. Aufbrühgetränkeautomat (1) nach Anspruch 11, **dadurch gekennzeichnet, dass** die Aufbrüheinheit (7) eine oder mehrere Schnell/Löse/Befestigungs-Wasser- oder - Fluid-Verbindungen (34a, 35a) aufweist.

13. Aufbrühgetränkeautomat (1) nach Anspruch 11 oder 12, **dadurch gekennzeichnet, dass** die Aufbrüheinheit (7) einen Griff (30) aufweist.

14. Aufbrühgetränkeautomat (1) nach Anspruch 13, **dadurch gekennzeichnet, dass** der Griff (30) die Schnellbefestigungs/Löse-Verbindungseinrichtung (31a, 31b) zu einer Lösestellung hin betätigt.

15. Aufbrühgetränkeautomat (1) nach Anspruch 13, **dadurch gekennzeichnet, dass** der Griff (30) durch ein Paar Handgriffe (30a, 30b) gebildet ist, die in einer Anordnung Seite an Seite vorgesehen sind und so angepasst sind, um sich zwischen einer ersten Position, in der sie weit voneinander weg sind und die Aufbrüheinheit (7) an dem Verkaufsautomat (1) befestigt ist, und einer zweiten Position, in der sie nahe zueinander gebracht sind und die Aufbrüheinheit (7) von dem Verkaufsautomat (1) gelöst ist, zu bewegen.

## Revendications

1. Distributeur automatique de boissons brassées (1) comprenant :
- une unité de brassage (7) équipée d'une chambre de brassage (8) qui peut être fermée au niveau de la portion inférieure de celle-ci au moyen d'un filtre mobile (9), ledit filtre (9) étant adapté pour retenir les résidus de brassage ;
- des moyens d'actionnement (11) adaptés pour provoquer le déplacement dudit filtre (9) d'une première position de brassage, dans laquelle ledit filtre (9) est associé à ladite chambre de brassage (8) de manière étanche, vers une seconde position de déchargement dans laquelle ledit filtre (9) est séparé de ladite chambre de brassage (8), et vice-versa,
lesdits moyens d'actionnement (11) comprenant une came (12) pour actionner le déplacement du filtre (9), les moyens d'actionnement (11) comprenant en outre des moyens de nettoyage (24) interagissant avec ledit filtre (9) pour retirer les résidus de brassage de celui-ci, lesdits moyens d'actionnement (11) actionnant lesdits moyens de nettoyage (24) lorsque le filtre (9) est dans ladite seconde position de déchargement de celui-ci,
ledit filtre (9) étant associé à une structure de support (13) au moyen d'un mécanisme cinématique articulé (14) comprenant au moins un premier levier (15) équipé d'un taquet du type rouleau (16) se déplaçant sur ladite came (12) **caractérisé en ce que** ledit premier levier (15) est relié par pivot à ladite structure de support (13) au moyen d'une connexion pivotante (19) située entre une première portion d'extrémité (36) et une seconde portion d'extrémité (20) du premier levier (15).

2. Distributeur automatique de boissons brassées (1) selon la revendication 1, **caractérisé en ce que** lesdits moyens d'actionnement (11) sont associés de façon coulissante à ladite structure de support (13).

3. Distributeur automatique de boissons brassées (1) selon l'une quelconque des revendications précédentes ou une combinaison de celles-ci, **caractérisé en ce que** lesdits moyens de nettoyage (24) sont attachés audits moyens d'actionnement (11).

4. Distributeur automatique de boissons brassées (1) selon l'une quelconque des revendications précédentes ou une combinaison de celles-ci, **caractérisé en ce que** lesdits moyens de nettoyage (24) se composent d'une brosse (25).

5. Distributeur automatique de boissons brassées (1) selon l'une quelconque des revendications précédentes ou une combinaison de celles-ci, **caractérisé en ce que** ladite première portion d'extrémité (36) est équipée d'une ouverture en forme de fente (17) dans laquelle un ergot (18) connecté audit filtre (9) est capable de se déplacer.

6. Distributeur automatique de boissons brassées (1) selon l'une quelconque des revendications précédentes ou une combinaison de celles-ci, **caractérisé en ce que** ladite seconde portion d'extrémité (20) est équipée d'un élément d'opposition (21) qui interagit avec ladite came (12) pour éloigner ledit filtre (9) de ladite première position de brassage de celui-ci.

7. Distributeur automatique de boissons brassées (1) selon l'une quelconque des revendications précédentes ou une combinaison de celles-ci, **caractérisé en ce que** le mécanisme cinématique articulé (14) comprend au moins un second levier (22) associé audit filtre (9),

8. Distributeur automatique de boissons brassées (1) selon la revendication 7, **caractérisé en ce que** ledit second levier (22) comprend une saillie en forme de coin (23) qui interagit avec une surface complémentaire (26) disposée sur lesdits moyens d'actionnement (11) pour associer ledit filtre (9) à ladite chambre de brassage (8) de manière étanche.

9. Distributeur automatique de boissons brassées (1) selon l'une quelconque des revendications précédentes ou une combinaison de celles-ci, **caractérisé en ce que** ledit filtre (9) est constitué d'une surface perforée (28) qui est reçue dans un réceptacle (29) de manière amovible,

10. Distributeur automatique de boissons brassées (1) selon la revendication 9, **caractérisé en ce que** ladite surface perforée (28) et ledit réceptacle (29) sont intégrés l'un avec l'autre et forme une construction en une seule pièce.

11. Distributeur automatique de boissons brassées (1) selon l'une quelconque des revendications précédentes ou une combinaison de celles-ci, **caractérisé en ce que** ladite unité de brassage (7) est associée de manière amovible audit distributeur automatique (1) par des moyens de connexion à fixation/dégagement rapide (31a, 31b).

12. Distributeur automatique de boissons brassées (1) selon la revendication 11, **caractérisé en ce que** ladite unité de brassage (7) comprend une ou plusieurs connexions pour fluide ou pour l'eau à fixation/dégagement rapide (34a, 35a).

13. Distributeur automatique de boissons brassées (1) selon l'une des revendications 11 ou 12, **caractérisé en ce que** ladite unité de brassage (7) comprend une poignée (30).

14. Distributeur automatique de boissons brassées (1) selon la revendication 13, **caractérisé en ce que** ladite poignée (30) actionne le dégagement desdits moyens de connexion à fixation/dégagement rapide (31a,31b).

15. Distributeur automatique de boissons brassées (1) selon la revendication 13, **caractérisé en ce que** ladite poignée (30) est constituée d'une paire de prises pour la main (30a,30b) disposées côte à côte et adaptées pour se déplacer entre une première position, dans laquelle elles sont largement éloignées l'une de l'autre et dans laquelle ladite unité de brassage (7) est fixée sur ledit distributeur automatique (1), et une seconde position dans laquelle elles sont amenées proche l'une de l'autre et dans laquelle ladite unité de brassage (7) est dégagée dudit distributeur automatique (1).
